# EUROPÄISCHE PATENTSCHRIFT

(11) **EP 1 377 756 B1**
(45) Veröffentlichungstag und Bekanntmachung des Hinweises auf die Patenterteilung: **09.02.2005**
(21) Anmeldenummer: 02707991.2
(22) Anmeldetag: 22.03.2002
(51) Int. Cl.: F16D 43/284

(54) **DREHZAHLDIFFERENZABHÄNGIGE HYDRAULISCHE KUPPLUNG MIT STEUERVENTIL**
SPEED DIFFERENTIAL-DEPENDENT HYDRAULIC CLUTCH WITH A CONTROL VALVE
EMBRAYAGE HYDRAULIQUE DEPENDANT DE LA DIFFERENCE DE REGIME, MUNI D'UNE SOUPAPE DE COMMANDE

(30) Priorität: 02.04.2001 AT 2492001
(43) Veröffentlichungstag der Anmeldung: 07.01.2004
(73) Patentinhaber: MAGNA Drivetrain AG & Co KG, 8502 Lannach (AT)
(72) Erfinder: GRATZER, Franz, A-8152 Stallhofen (AT); SCHAFFERNAK, Robert, A-8160 Weiz (AT)
(74) Vertreter: Kovac, Werner
(86) Internationale Anmeldenummer: PCT/AT2002/000092
(87) Internationale Veröffentlichungsnummer: WO 2002/079661

(56) Entgegenhaltungen:
- EP-A- 0 570 841
- US-A- 6 145 644

## Beschreibung

Die Erfindung betrifft eine drehzahldifferenzabhängige hydraulische Kupplung, die besteht aus einem in einem raumfesten und ein Reservoir für eine Arbeitsflüssigkeit bildenden Gehäuse rotierenden Triebgehäuse, einer mit dem Triebgehäuse drehfest verbindbaren ersten Welle, einer mit dem Triebgehäuse drehfest verbundenen zweiten Welle, und weiters einer hydrostatischen Verdrängungsmaschine, einer Reibungskupplung zur Verbindung der ersten Welle mit dem Triebgehäuse und einem Kolben zur Beaufschlagung der Reibungskupplung, welche in dem Triebgehäuse untergebracht sind, wobei das Triebgehäuse einen Druckraum hat und wo bei Auftreten einer Differenzdrehzahl zwischen dem Triebgehäuse und der zweiten Welle in dem Druckraum ein Druck erzeugt wird, der eine Beaufschlagung der Reibungskupplung bewirkt, und wobei vom Druckraum ein Kanal zu einem Steuerventil führt, das den Weg zu einem Raum niedereren Druckes gesteuert freigibt und im Triebgehäuse und/oder in der mit dem Triebgehäuse drehfest verbundenen zweiten Welle koachsial mit dieser angeordnet ist.

Derartige Kupplungen finden in verschiedenen Konstellationen im Antriebsstrang von Kraftfahrzeugen Verwendung, zur direkten Übertragung eines Drehmomentes oder zur Sperrung eines verbundenen Differentialgetriebes für den Antrieb der Räder ciner Achse oder für die Verteilung des Antriebsmomentes zwischen zwei Achsen. Die hydrostatische Verdrängungsmaschine besteht beispielsweise aus einem Innenrotor und aus einem Aussenrotor, genauso können aber auch hydrostatische Verdrängungsmaschinen anderer Bauart verwendet werden. In jedem Falle führen bei Drehzahldifferenz zwei Teile (beispielsweise Antriebsgehäuse und Ausgangswelle) eine Relativbewegung aus und erzeugen so einen den Kolben der Reibungskupplung beaufschlagenden Druck.

Eine derartige drehzahldifferenzabhängige hydraulische Kupplung ist aus der US 4,924,989 bekannt. Dort ist der in die Kupplung ragende Teil der mit dem Triebgehäuse verbindbaren Welle als Steuerventil ausgebildet, das ein die Verbindung zwischen Druck- und Saugseite der Pumpe herstellendes Steuerglied enthält. Dadurch, dass das Steuerventil sich in der verbindbaren Welle befindet, sind für dessen Verbindung mit der Druck- und Saugseite der Pumpe zwei Dreheintragungen erforderlich. Über eine dritte Dreheintragung wird das von dem Bremszylinder beim Bremsen unter Druck gesetzte Fluid dem Steuerventil zur Betätigung des Steuergliedes zugeführt. Das Steuerventil ist dadurch so unzugänglich, dass es nur hydraulisch betätigbar ist. Das aber ist bei einer nicht mit dem Bremssystem gekoppelten echten Steuerung nicht zielführend.

Eine drehzahldifferenzabhängige hydraulische Kupplung mit einem zentralen Ventil ist aus der US 6,145,644 bekannt. Das Ventil ist in der mit dem Triebgehäuse verbundenen Welle, also wieder ganz innen, untergebracht. Es ist aber nur ein Ventil, das auf gewisse Betriebszustände (Temperatur, Druck) ohne Steuereingriff von ausserhalb reagiert, also kein Steuerventil.

Es ist aber das der Erfindung zugrundeliegende Problem, eine gattungsgemäße Kupplung so auszubilden, daß eine feinfühlige, genaue und schnelle Regelung und Anpassung der Charakteristik gewährleistet ist, mit möglichst geringem Aufwand.

Erfindungsgemäß wird das dadurch erreicht, daß das Steuerventil ein in Richtung der Achse verschiebbares Steuerglied besitzt, das von einem gehäusefesten Aktuator betätigt wird und daß ein ausserhalb der mit dem Triebgehäuse drehfest verbundenen zweiten Welle angordneter gehäusefest gelagerter Aktuator vorgesehen ist, der auf das Steuerglied einwirkt. Das Steuerventil dreht also immer mit, wodurch keine Dreheintragungen mehr erforderlich sind und das rotierende Steuerventil vom stationären Gehäuse aus betätigt werden kann. Da Triebgehäuse und zweite Welle fest miteinander verbunden bzw. sogar einstückig sind, ist das Steuerventil im Triebgehäuse dort untergebracht, wo der Kanal direkt herangeführt werden kann; und doch kann die Betätigung von der zweiten Welle aus erfolgen, also durch einen Akzuator kleinen Durchmessers, der genauer und mit weniger Reibung geführt ist.

In Weiterbildung der Erfindung besteht das Steuerventil aus dem Steuerglied und einem Ventilkörper mit einer mit der Rotationsachse koachsialen Zylinderfläche für das Steuerglied, wobei die koachsiale Zylinderfläcbe in das Innere des Triebgehäuses offen ist und der Kanal vom Druckraum in eine Einlassöffnung der Zylinderfläche mündet (Anspruch 2). Das Steuerglied ist demnach ein koachsialer Steuerkolben, der von ihm freigegebene Fluidstrom kann in das Innere der Reibungskupplung strömen und dort kühlen und schmieren.

Eine besonders einfache Bauweise und zuverlässige Funktion wird dadurch erhalten, daß das Steuerglied ein von einer Druckfeder in Richtung Öffnen des Ventiles belasteter zylindrischer Stift ist (Anspruch 3). Ein derartiger Stift ist mit sehr enger Toleranz herstellbar, die Druckfeder stellt sicher, dass bei einem Defekt die Kupplung sehr schnell gelöst wird. Dabei ist das Steuerventil ein in Abhängigkeit von Betriebszuständen gesteuertes Proportionalventil (Anspruch 4). Das erlaubt die Steuerung des von der Kupplung übertragenen Momentes in Abhängigkeit von Fahrzuständen und gegebenenfalls dem Fahrerwunsch auf elektronischem Wege.

In einer ersten Ausführungsform wirkt der Aktuator mit einer die zweite Welle umgebenden mitdrehenden und in achsialer Richtung verschiebbaren Schaltmuffe zusammen und ist ein die Schaltmuffe und die zweite Welle durchsetzender Stab vorgesehen, der das Steuerglied berührt, wobei die zweite Welle für den Durchtritt des Stabes einen Schlitz aufweist (Anspruch 5). Da die Schaltmuffe auf der Welle sitzt, kann ihr Durchmesser klein sein. Der Stab erlaubt die Einleitung der Bewegung ins Innere der Welle und ist in dem Schlitz präzise geführt.

In einer besonders vorteilhaften Ausführungsform ist der Aktuator ein die zweite Welle umgebender Elektromagnet, der durch einen magnetisch neutralen Bereich der zweiten Welle hindurch auf das Steuerglied wirkt (Anspruch 6). Auf diese Weise kann das Feld des gehäusefesten Elektromagneten berührungslos und ohne Reibungsverluste durch die Welle hindurch auf das Steuerventil einwirken. Dabei ist besonders günstig, dass der Ventilkörper in eine Zentralbohrung des Triebgehäuses eingesetzt und das Steuerglied ein Stift mit einem Magnetkern ist (Anspruch 7).

Im folgenden wird die Erfindung anhand von Abbildungen beschrieben. und erläutert. Es stellen dar:
- Fig. 1:: ein Schema der ersten Ausführungsform der Erfindung,
- Fig. 2:: ein Längsschnitt durch die erste Ausführungsform,
- Fig. 3:: ein Längsschnitt durch die zweite Ausführungsform.

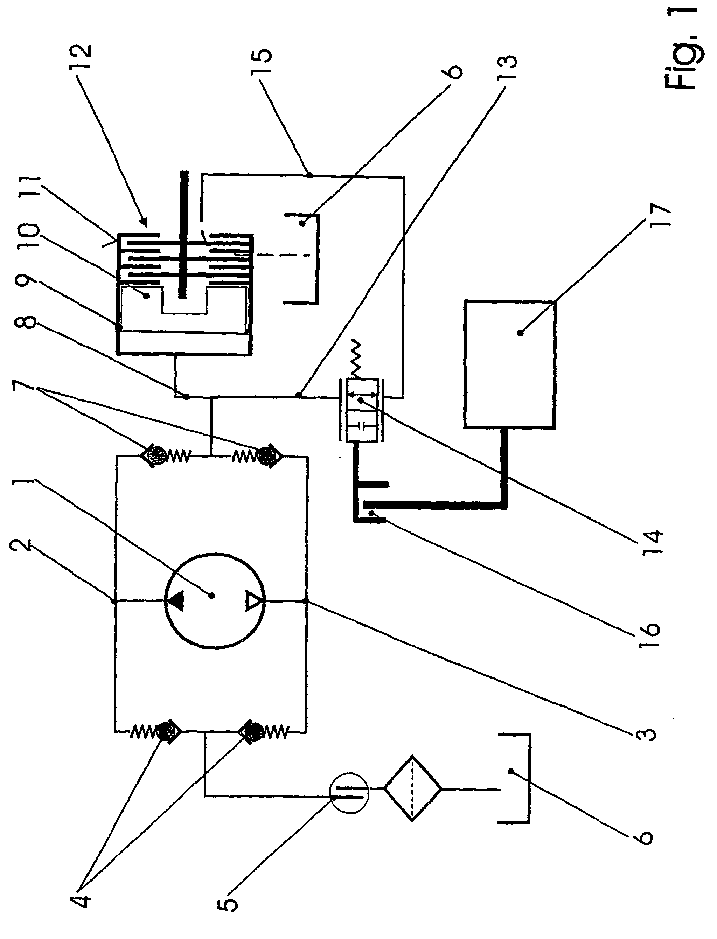

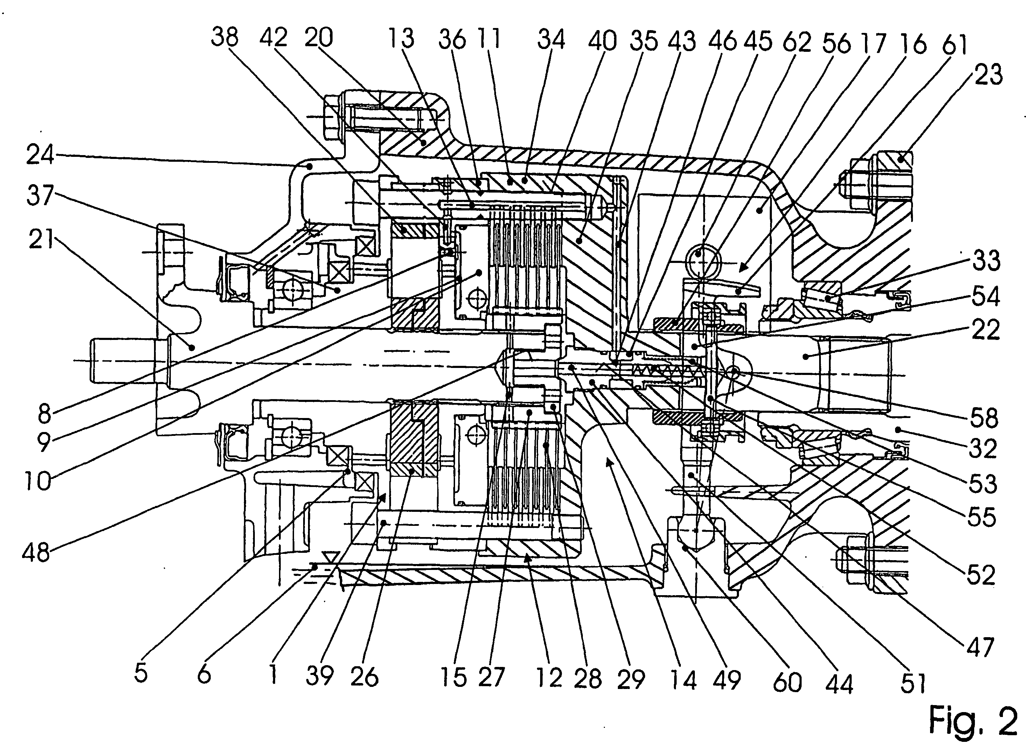

In **Fig. 1** ist eine hydrostatische Verdrängungsmaschine 1 ohne ihre Anbindung an die Elemente der drehzahldifferenzabhängigen hydraulischen Kupplung nur angedeutet. Dazu wird auf Fig. 2 verwiesen. Die Maschine besitzt eine Druckkammer 2 oder 3 und eine Saugkammer 3 oder 2, je nach dem Vorzeichen der Drehzahldifferenz. Die Kammern 2,3 sind über saugseitige Rückschlagventile 4 und eine Dreheintragung 5 mit einem Sumpf 6 verbunden, aus dem angesaugt wird. Auf der anderen Seite sind die Kammern 2, 3 über druckseitige Rückschlagventile 7 und eine Druckleitung 8 mit einem Druckraum 9 verbunden, in den sie auf einen in einem Triebgehäuse 11 geführten Kolben 10 wirken. Durch den Druck im Druckraum 9 werden die Lamellen bzw. Scheiben einer Kupplung 12 zum Anliegen gebracht und die Kupplung so mehr oder weniger geschlossen.

Von der Druckleitung 8 zweigt ein Kanal 13 mit einem Steuerventil 14 ab. Von diesem führt eine Leitung 15 zum Sumpf 6, hier zu Zwecken der Schmierung und Kühlung durch das Innere der Kupplung 12. Das Steuerventil 14 befindet sich, wie anhand der Fig. 2 näher auszuführen, in einem drehenden Teil und wird über eine Bewegungskoppel 16 von einem sich nicht drehenden Aktuator betätigt. Im gezeigten Beispiel ist die Bewegungskoppel 16 eine Schaltgabel.

In **Fig. 2** ist das Gehäuse mit 20, eine erste Welle mit 21 und eine zweite Welle mit 22 bezeichnet. Das Gehäuse 20 ist glockenförmig, bildet in seiner Bodenregion einen Sumpf 6 für das Arbeitsfluid, auf der Seite der zweiten Welle 22 einen Flansch 23 zur Verbindung mit einem anderen Teil eines Antriebsstranges, etwa mit einem Achsdifferential, und besitzt auf der Seite der ersten Welle 21 einen mit dem Gehäuse 20 verschraubten Deckelteil 24. Die erste Welle 21, sie ist hier mit einer Kraftquelle verbunden, ragt tief in das Gehäuse 20 hinein und trägt einen Innenrotor 26 der Pumpe 1, die hier eine Pumpe vom Gerotor-Typ ist, und eine Kupplungsnabe 27. Beide sind mit ihr drehfest verbunden, etwa mittels geeigneter Kuppelzähne oder Keilwellenprofile. Auf der Kupplungsnabe 27 sind innere Kupplungsscheiben 28 drehfest und verschiebbar angeordnet. Die Kupplungsnabe 27 ist an einer Endplatte 29 positioniert.

Die zweite Welle 22 ist hier drehfest mit einer Abtriebswelle 32 verbunden, die beispielsweise eine in einem Lager 33 geführte Hohlwelle ist. Mit der zweiten Welle 22 ist das Triebgehäuse 11 drehfest verbunden bzw, wie gezeigt, einstückig. Das Triebgehäuse 11 wird von einer Umfangswand 34 mit einem Boden 35, einer Zwischenplatte 36 und einem Pumpengehäuse 37 gebildet, die mittels Gewindeschrauben 39 zusammengespannt sind. In der Zwischenplatte 36 ist der Druckraum 9 ausgebildet, in dem der Kolben 10 geführt ist. Das Pumpengehäuse 37 enthält, exzentrisch und drehbar, einen Aussenrotor 38, der mit dem Innenrotor 26 zusammenwirkt. Da der Innenrotor 26 mit der ersten Welle 21 drehfest verbunden ist und der Aussenrotor 38 mit der zweiten Welle 22 zusammenwirkt, wird die Fördermenge bzw der von der Pumpe 1 erzeugte Druck von der Differenz der Drehzahlen der ersten Welle 21 und der zweiten Welle 22 bestimmt.

In der Zwischenplatte 3 6 ist, diese in Achsrichtung durchquerend, die Druckleitung 8 zu erkennen. Von dieser zweigt ein Stichkanal 42 ab und mündet in der Gewindebohrung 40, in die eine der Gewindeschrauben 39 eingeschraubt ist. Der Kanal 13 verläuft in der Achse dieser Gewindeschraube 39 und weiter von der Gewindebohrung 40 in einen Radialkanal 43, der am Steuerventil 14 endet.

Das Steuerventil 14 ist in eine konzentrische Bohrung 48 eingelassen, die im Boden 35 des Triebgehäuses 11 mit einem Gewinde beginnend abgestuft bis in die zweite Welle 22 reicht. In dieser Bohrung 48 befindet sich ein Ventilkörper 44, der dichtend in das Triebgehäuse 11 eingeschraubt ist und einen Ringraum 45 bildet, von dem aus eine oder mehrere Einlassöffnungen 46 in das Innere des Ventilkörpers 44 reichen und in einer koachsialen Zentralbohrung 49 münden, die eine Zylinderfläche 47 bildet. In dieser ist ein Steuerglied 52 in achsialer Richtung verschiebbar. Dieses Steuerglied ist hier ein einfacher zylindrischer Stift. Er wird von einer Druckfeder 53 im Bilde nach rechts gedrückt und vom Aktuator gegen die Kraft dieser Feder in Richtung Schließen der Einlaßöffnungen 46 bewegt.

Dazu durchsetzt ein Schlitz 54 die zweite Welle 22, wobei in dem Schlitz 54 ein Stab 55 in Achsialrichtung verschiebbar geführt ist. Dieser Stab 55 steckt beiderseits in einer sich mit der zweitenWelle 22 drehenden Schaltmuffe 56. Diese Schaltmuffe 56 ist, hier über ein Rillenkugellager, mit einem sich nicht drehenden Schaltring 57 verbunden, welcher seinerseits von einem Schalthebel 59 über einen Mitnehmerstift 58 bewegt wird. Der Schalthebel 59 ist mit seinem unteren Ende in einem sphärischen Lager 60 des Gehäuses 20 geführt und besitzt an seinem oberen Ende einen Zahnsektor 61, in den hier ein Aktuatorritzel 62 angreift. In diesem Fall könnte der Aktuator ein Schrittmotor, gegebenenfalls mit entsprechendem Untersetzungsgetriebe sein.

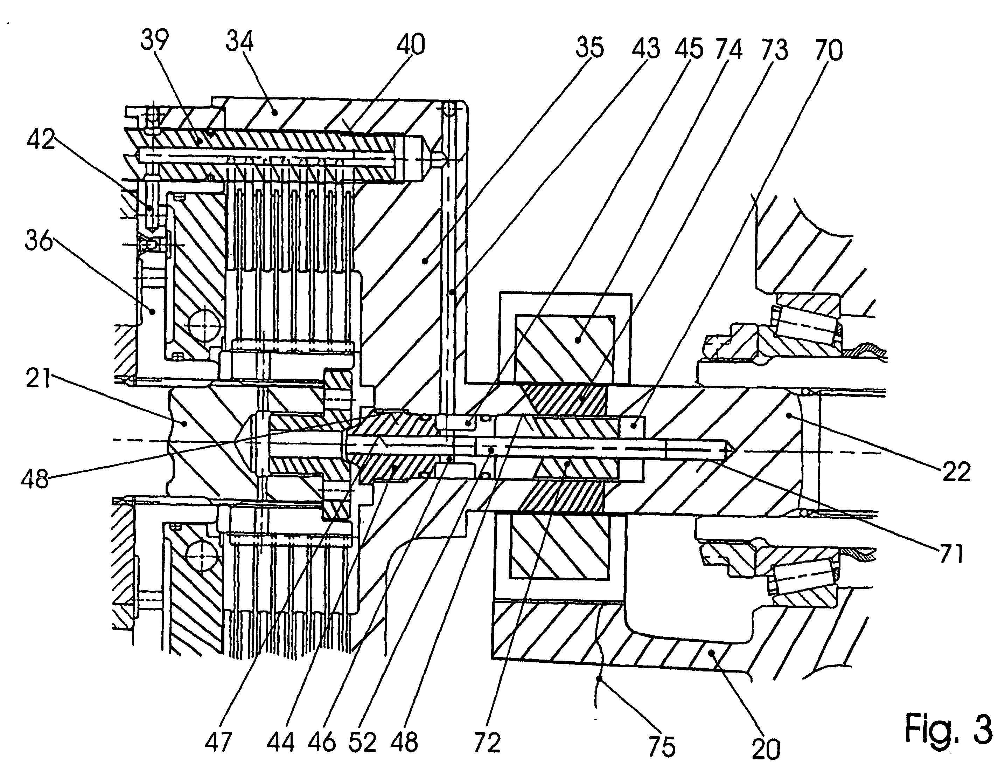

In **Fig. 3** ist die mechanische Betätigung der Fig. 2 durch eine magnetische ersetzt. Dazu ist die Bohrung 48 der zweiten Welle 22 erweitert und durch eine Bohrung 70 verlängert, an die eine Führungsbohrung 71 anschließt. So ist das Steuerglied 52 mit seinem vorderen Ende im Ventilkörper 44 und mit seinem hinteren Ende in der Führungsbohrung 71 geführt. In dem Raum 70 besitzt das Steuerglied 52 einen fest mit ihm verbundenen Anker 72. Die Ausführung könnte auch einstückig bzw. das Steuerglied 52 selbst als Anker ausgebildet sein. Außerhalb der zweiten Welle 22 ist stationär, also am Gehäuse 20 befestigt, eine Magnetspule 74 vorgesehen. Damit das von ihr erzeugte Magnetfeld auf den Anker 72 wirken kann, besitzt die zweite Welle 22 eine Zone 73 geringer magnetischer Permeabilität. Diese kann durch Werkstoffauswahl oder Wärmebehandlung hergestellt werden.

Der Magnetspule 74 wird über eine Leitung 75 Energie zugeführt, die von einem nicht gezeigten Steuergerät so moduliert ist, dass das Steuerventil 14 als Proportionalventil betrieben werden kann. Dieses Steuergerät kann sowohl den Fahrzustand betreffende Signale als auch Eingriffe des Fahrers zu einem Ausgangssignal verarbeiten, das über die Magnetspule 74 das Steuerventil 14 und damit das übertragene Drehmoment steuert. Die mehrfachen Vorteile einer elektrischen Ansteuerung des drehenden Steuerventiles, und das ohne Schleifkontakte, liegen auf der Hand.

## Patentansprüche

1. Drehzahldifferenzabhängige hydraulische Kupplung, bestehend aus einem in einem raumfesten und ein Reservoir für eine Arbeitsflüssigkeit bildenden Gehäuse (20) rotierenden Triebgehäuse (11), einer mit dem Triebgehäuse drehfest verbindbaren ersten Welle (21), einer mit dem Triebgehäuse drehfest verbundenen zweiten Welle (22), und weiters einer hydrostatischen Verdrängungsmaschine (1), einer Reibungskupplung (12) zur Verbindung der ersten Welle (21) mit dem Triebgehäuse (11) und einem Kolben (10) zur Beaufschlagung der Reibungskupplung (12), welche in dem Triebgehäuse untergebracht sind, wobei das Triebgehäuse (11) einen Druckraum (9) hat und wo bei Auftreten einer Differenzdrehzahl zwischen dem Triebgehäuse (11) und der zweiten Welle (22) in dem Druckraum (9) ein Druck erzeugt wird, der eine Beaufschlagung der Reibungskupplung (12) bewirkt, und wobei vom Druckraum ein Kanal (13) zu einem Steuerventil (14) führt, das den Weg zu einem Raum niedereren Druckes gesteuert freigibt, und im Triebgehäuse (11) und/oder in der mit dem Triebgehäuse (11) drehfest verbundenen zweiten Welle (22) koachsial mit dieser angeordnet ist, **dadurch gekennzeichnet, dass** das Steuerventil (14) ein in Richtung der Achse verschiebbares Steuerglied (52) besitzt, das von einem gehäusefesten Aktuator (59,61,62; 74) betätigt wird und daß ein ausserhalb der mit dem Triebgehäuse (11) drehfest verbundenen zweiten Welle (22) angordneter gehäusefest gelagerter Aktuator (60,61,62; 74) vorgesehen ist, der auf das Steuerglied (52) einwirkt.

2. Drehzahldifferenzabhängige hydraulische Kupplung nach Anspruch 1, **dadurch gekennzeichnet, daß** das Steuerventil (14) aus dem Steuerglied (52) und einem Ventilkörper (44) mit einer mit der Rotationsachse koachsialen Zylinderfläche (47) für das Steuerglied (52) besteht, wobei die koachsiale Zylinderfläche (47) in das Innere des Triebgehäuses (11) offen ist und der Kanal (13) vom Druckraum (9) in eine Einlassöffnung (46) an der Zylinderfläche (47) mündet.

3. Drehzahldifferenzabhängige hydraulische Kupplung nach Anspruch 2, **dadurch gekennzeichnet, daß** das Steuerglied (52) ein von einer Druckfeder (53) in Richtung Öffnen des Steuerventiles (14) belasteter zylindrischer Stift ist.

4. Drehzahldifferenzabhängige hydraulische Kupplung nach Anspruch 1, **dadurch gekennzeichnet, daß** das Steuerventil (14) ein in Abhängigkeit von Betriebszuständen gesteuertes Proportionalventil ist.

5. Drehzahldifferenzabhängige hydraulische Kupplung nach Anspruch 1, **dadurch gekennzeichnet, daß** der Aktuator (60,61,62) mit einer die zweite Welle (22) umgebenden mitdrehenden und in achsialer Richtung verschiebbaren Schaltmuffe (56) zusammenwirkt, dass ein die Schaltmuffe (56) und die zweite Welle (22) durchsetzender Stab (55) vorgesehen ist, der das Steuerglied (52) berührt, wobei die zweite Welle (22) für den Durchtritt des Stabes (55) einen Schlitz (54) aufweist.

6. Drehzahldifferenzabhängige hydraulische Kupplung nach Anspruch 1, **dadurch gekennzeichnet, daß** der Aktuator (74) ein die zweite Welle (22) umgebender Elektromagnet (74) ist, der durch die zweite Welle (22) hindurch auf das Steuerglied (52) wirkt, wobei ein magnetisch neutraler Bereich (73) der Welle (22) einen magnetischen Kurzschluss verhindert.

7. Drehzahldifferenzabhängige hydraulische Kupplung nach Anspruch 6, **dadurch gekennzeichnet, daß** der Ventilkörper (44) in eine Zentralbohrung (48) des Triebgehäuses (11) eingesetzt ist und das Steuerglied (52) ein Stift mit einem Anker (72) ist.

## Claims

1. A speed-difference-dependent hydraulic clutch, comprising a drive housing (11), which rotates in a housing (20) that is fixed in space and forms a reservoir for a working fluid, a first shaft (21) which can be connected in a rotationally fixed manner to the drive housing, a second shaft (22) which is connected in a rotationally fixed manner to the drive housing, and furthermore a hydrostatic displacement machine (1), a friction clutch (12) for connecting the first shaft (21) to the drive housing (11) and a piston (10) for acting on the friction clutch (12), which are accommodated in the drive housing, the drive housing (11) having a pressure space (9), and where a pressure is produced in the pressure space (9) when a difference occurs between the speed of the drive housing (11) and that of the second shaft (22), this pressure giving rise to action upon the friction clutch (12), and a passage (13) leading from the pressure space to a control valve (14) which opens up the route to a space of lower pressure in a controlled manner, and is arranged in the drive housing (11) and/or, in the second shaft (22), which is connected in a rotationally fixed manner to the drive housing (11), is arranged coaxially with said shaft, **characterized in that** the control valve (14) has a control element (52) which can be displaced in the direction of the axis and is actuated by an actuator (59, 61, 62; 74) which is fixed on the housing, and **in that** an actuator (60, 61, 62; 74) which is arranged outside the second shaft (22), which is connected in a rotationally fixed manner to the drive housing (11), is mounted fixed on the housing and acts on the control element (52) is provided.

2. The speed-difference-dependent hydraulic clutch as claimed in claim 1, **characterized in that** the control valve (14) comprises the control element (52) and a valve body (44) having a cylindrical surface (47) which is coaxial with the axis of rotation and is intended for the control element (52), the coaxial cylindrical surface (47) being open into the interior of the drive housing (11) and the passage (13) leading from the pressure space (9) into an inlet opening (46) on the cylindrical surface (47).

3. The speed-difference-dependent hydraulic clutch as claimed in claim 2, **characterized in that** the control element (52) is a cylindrical pin which is loaded in the opening direction of the control valve (14) by a compression spring (53).

4. The speed-difference-dependent hydraulic clutch as claimed in claim 1, **characterized in that** the control valve (14) is a proportional valve which is controlled as a function of operating states.

5. The speed-difference-dependent hydraulic clutch as claimed in claim 1, **characterized in that** the actuator (60, 61, 62) interacts with a selector sleeve (56) which surrounds the second shaft (22), rotates together with it and can be displaced in the axial direction, **in that** a rod (55) which passes through the selector sleeve (56) and the second shaft (22) and comes into contact with the control element (52) is provided, the second shaft (22) having a slot (54) for the rod (55) to pass through.

6. The speed-difference-dependent hydraulic clutch as claimed in claim 1, **characterized in that** the actuator (74) is a solenoid (74) which surrounds the second shaft (22) and acts on the control element (52) through the second shaft (22), with a magnetically neutral region (73) of the shaft (22) preventing a magnetic short circuit.

7. The speed-difference-dependent hydraulic clutch as claimed in claim 6, **characterized in that** the valve body (44) is inserted into a central hole (48) of the drive housing (11) and the control element (52) is a pin with an armature (72).

## Revendications

1. Embrayage hydraulique dépendant de la différence de régime, formé par un carter de commande (11) monté tournant dans un carter (20) fixe formant un réservoir pour un liquide de travail, un premier arbre (21) apte à être relié de manière solidaire en rotation avec le carter de commande, un deuxième arbre (22) relié de manière solidaire en rotation avec le carter de commande et, en outre, un moteur de déplacement (1) hydrostatique, un embrayage à friction (12) destiné à relier le premier arbre (21) avec le carter de commande (11) et un piston (10) destiné à solliciter l'embrayage à friction (12), lesquels sont logés dans le carter de commande, le carter de commande (11) comportant une chambre de pression (9), et une pression étant générée dans la chambre de pression (9) lorsqu'il se produit une différence de vitesse de rotation entre le carter de commande (11) et le deuxième arbre (22), laquelle pression exerce une sollicitation sur l'embrayage à friction (12), et un canal (13) s'étendant de la chambre de pression vers une soupape de commande (14), qui libère par commande la voie vers une chambre à pression plus basse, et étant agencé dans le carter de commande (11) et/ou dans le deuxième arbre (22), solidaire en rotation avec le carter de commande, coaxialement à cet arbre, **caractérisé en ce que** la soupape de commande (14) comporte un organe de commande (52) mobile dans la direction axiale et actionné par un actionneur (59, 61, 62 ; 74) fixé au carter, et **en ce qu'**il est prévu un actionneur (60, 61, 62 ; 74), qui est monté fixe sur le carter en dehors du deuxième arbre (22), solidaire en rotation avec le carter de commande (11), et qui agit sur l'organe de commande (52).

2. Embrayage hydraulique dépendant de la différence de régime selon la revendication 1, **caractérisé en ce que** la soupape de commande (14) est formée par l'organe de commande (52) et un corps de soupape (44) avec une surface cylindrique (47) coaxiale à l'axe de rotation pour l'organe de commande (52), la surface cylindrique (47) coaxiale à l'axe de rotation étant ouverte vers l'intérieur du carter de commande (11), et le canal (13) partant de la chambre de pression (9) se raccordant au niveau d'un orifice d'admission (46) à la surface cylindrique (47).

3. Embrayage hydraulique dépendant de la différence de régime selon la revendication 2, **caractérisé en ce que** l'organe de commande (52) est une broche cylindrique sollicitée par un ressort de pression (53) dans le sens de l'ouverture de la soupape de commande (14).

4. Embrayage hydraulique dépendant de la différence de régime selon la revendication 1, **caractérisé en ce que** la soupape de commande (14) est une soupape proportionnelle commandée en fonction des états de fonctionnement.

5. Embrayage hydraulique dépendant de la différence de régime selon la revendication 1, **caractérisé en ce que** l'actionneur (60, 61, 62) coopère avec un manchon d'embrayage (56) entraîné en rotation autour du deuxième arbre (22) et mobile dans le sens axial, **en ce qu'**il est prévu une tige (55), qui passe à travers le manchon d'embrayage (56) et le deuxième arbre (22) et qui est en contact avec l'organe de commande (52), le deuxième arbre (22) étant muni d'une fente (54) pour le passage de la tige (55).

6. Embrayage hydraulique dépendant de la différence de régime selon la revendication 1, **caractérisé en ce que** l'actionneur (74) est un électroaimant (74), qui entoure le deuxième arbre (22) et qui agit sur l'organe de commande (52) à travers le deuxième arbre (22), une zone (73) magnétiquement neutre de l'arbre (22) empêchant un court-circuit magnétique.

7. Embrayage hydraulique dépendant de la différence de régime selon la revendication 6, **caractérisé en ce que** le corps de soupape (44) est inséré dans un alésage central (48) du carter de commande (11), et l'organe de commande (52) est une broche munie d'une armature (72).
